# EUROPEAN PATENT APPLICATION

(11) **EP 4 216 141 A1**
(43) Date of publication of application: **26.07.2023**
(21) Application number: 22879576.1
(22) Date of filing: 03.08.2022
(51) Int. Cl.: G06Q 30/06

(54) **ENVIRONMENTAL LOAD MANAGEMENT DEVICE**

(30) Priority: 10.12.2021 JP 2021200713
(71) Applicant: Future Science Research Inc., Tokyo 107-0052 (JP)
(72) Inventor: MATSUMURA, Akihiko, Tokyo 107-0052 (JP)
(74) Representative: Schröer, Gernot H.
(86) International application number: PCT/JP2022/029755
(87) International publication number: WO 2023/105851

(57) **Abstract**

An environmental impact management device includes an emission right acquiring unit that acquires emission right data indicating a right to emit a predetermined amount of chemical substance, a load acquiring unit that acquires manufacture load data indicating an amount of the chemical substance emitted by manufacture of an article, and a use fee calculating unit that calculate a use fee of the article on the basis of a price of the emission right data and the amount of the chemical substance emitted by manufacture of the article.

## Description

### Field

The present invention relates to a technology for controlling environmental impacts caused by chemical releases.

### Background

Global warming is thought to be due to increase in atmospheric carbon dioxide concentration as a result of humans' extracting carbon compounds accumulated under the ground over many years and burning the compounds to extract energy.

Aiming at reducing greenhouse gases including carbon dioxide, the Kyoto Protocol was signed in 1990. In the Kyoto Protocol, greenhouse gases emission quotas were set for respective countries. In addition, for further promoting reduction of greenhouse gases, an idea of a financial product named "carbon credit (CC)" is proposed. Specifically, when a project, such as installation of energy-saving equipment, introduction of renewable energy, tree planting and thinning, leading to reduction of greenhouse gases, is carried out, a public institution certifies that a carbon credit is produced.

Purchase of a carbon credit results in a support for greenhouse gases reducing projects. Each country attempts to achieve its target greenhouse gas reduction by purchasing carbon credits in addition to reducing the greenhouse gas emissions. There have recently been a growing trend for preventing global warming and sharp increase in demand for carbon credit, and the trading price of carbon credits is expected to increase.

### Related Art List

### Patent Literatures

Patent Literature 1: JP 2009-217401 A
Patent Literature 2: JP 2005-049937 A

### Summary

### Technical Problem

Carbon credits provide an effective mechanism in changing future company activities. In the meantime, in order to prevent global warming, not only the behaviors of companies but also the behaviors of individuals need to change. Because the carbon credit is an idea essentially based on business transactions, the procedures for individuals to deal with carbon credits as in Patent Literature 1 are complicated.

The present invention has been achieved on the basis of recognition of the aforementioned problems, and a chief object thereof is to provide a technology for reducing procedural burden on individuals and promoting shift toward an earth-friendly recycling-based society.

### Solution to problem

An environmental impact management device according to an aspect of the present invention includes: an emission right acquiring unit that acquires emission right data indicating a right to emit a predetermined amount of chemical substance; a load acquiring unit that acquires manufacture load data indicating an amount of the chemical substance emitted by manufacture of an article; and a use fee calculating unit that calculates a use fee of the article on the basis of a price of the emission right data and the amount of the chemical substance emitted by manufacture of the article.

An environmental impact management device according to another aspect of the present invention includes: an emission right acquiring unit that acquires emission right data indicating a right to emit a predetermined amount of chemical substance; a consumption acquiring unit that acquires supply data indicating a type and a supply quantity of energy supplied to an article; and a use fee calculating unit that refers to a load table defining types of energy with emissions of the chemical substance, and calculates a use fee of the article on the basis of a price of the emission right data, and the type and the supply quantity of the energy.

An environmental impact management device according to another aspect of the present invention includes: an emission right acquiring unit that acquires emission right data indicating a right to emit a predetermined amount of chemical substance; a load acquiring unit that acquires manufacture load data indicating an amount of the chemical substance emitted by manufacture of an article; a consumption acquiring unit that acquires supply data indicating a type and a supply quantity of energy supplied to the article; a payment unit that cancels out a whole or part of a levy imposed depending on an emission of the chemical substance by the emission right data; a degradation calculating unit that calculates a degradation progression degree of the article resulting from use of the article; and a use fee calculating unit that calculates a use fee of the article.

The use fee calculating unit calculates a first use fee of the article on the basis of a price of the emission right data, the amount of the chemical substance emitted by manufacture of the article, and the degradation progression degree of the article, further refers to a load table defining types of energy with emissions of the chemical substance, calculates a second use fee of the article on the basis of the price of the emission right data, and the type and the supply quantity of the energy, and calculates the use fee of the article by adding the second use fee to the first use fee.

### Advantageous Effects of Invention

The present invention reduces procedural burden on individuals and facilitates promotion of shift toward a recycling-based society.

### Brief Description of Drawings

FIG. 1 is a conceptual diagram of a car leasing system according to an embodiment.
FIG. 2 is a schematic diagram illustrating a structure of a vehicle use fee.
FIG. 3 is a system configuration diagram of the car leasing system.
FIG. 4 is a hardware configuration diagram of an environmental impact management device.
FIG. 5 is a functional block diagram of the environmental impact management device.
FIG. 6 is a data structure table of lease management information.
FIG. 7 is a data structure table of manufacture load data.
FIG. 8 is a graph schematically illustrating an aging degradation pattern of a secondary battery.
FIG. 9 is a data structure table of a load table.
FIG. 10 is a flowchart illustrating processes of fee calculation.
FIG. 11 is a flowchart illustrating a process of calculating a fee M2 in S10 in FIG. 10 in detail.

### Description of Embodiments

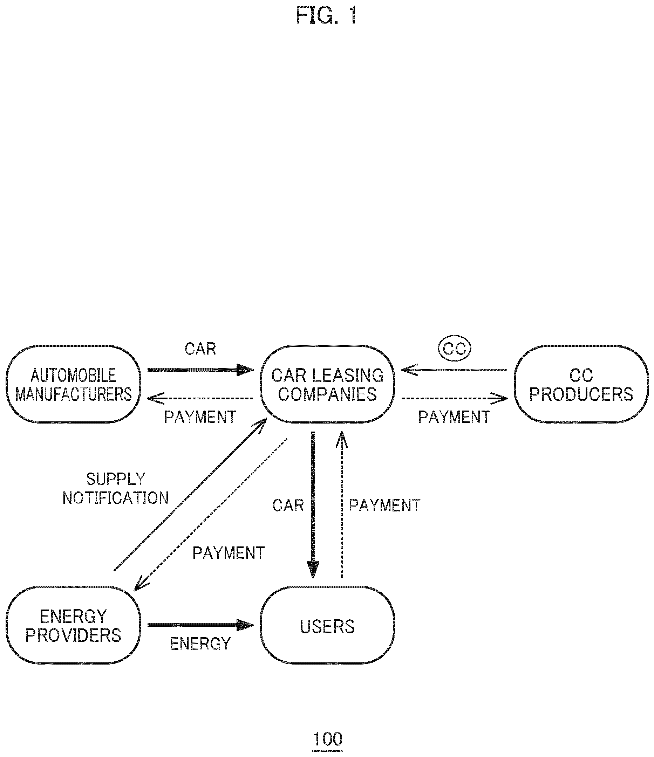

FIG. 1 is a conceptual diagram of a car leasing system 100 according to an embodiment.

The embodiment is on an assumption of a society in which a levy (financial burden) such as a carbon tax depending on a carbon dioxide emission amount is imposed on a company activity that has emitted the carbon dioxide. Producers (hereinafter referred to as "CC producers") of carbon credits (emission right data) grow a plant called sorghum.

Sorghum can be used as fuel for biomass power generation. Sorghum is a crop in tropical and subtropical areas that absorbs water with deep roots, and is therefore easy to grow even in areas with low rainfall. In addition, sorghum stores carbon dioxide from the atmosphere in its roots, and therefore contributes to reduction of greenhouse gases. Sorghum is expected to serve as effective countermeasures against global warming.

CC producers produce carbon credits by growing sorghum and being approved by a public institution. A carbon credit in the present embodiment refers to "the right to emit a predetermined amount of carbon dioxide".

Car leasing companies conduct business of leasing cars to users. A user leases a car from a car leasing company for a long term, and pays a use fee of the car for every unit period, such as a month (hereinafter simply referred to as a "vehicle use fee").

Car leasing companies purchase carbon credits from CC producers. A car leasing company may sign a long-term contract with a CC producer to continuously purchase carbon credits in a large quantity, or may purchase a necessary quantity of carbon credits from a trading market thereof. For example, even when a company has emitted a ton of carbon dioxide, the company can cancel out the carbon dioxide emission by purchasing a carbon credit corresponding to the amount of one ton. In other words, the levy caused by a ton of carbon dioxide emission can be cancelled out by the carbon credit. The price of carbon credits (hereinafter referred to as a "CC price") varies depending on supply and demand. Car leasing companies pass on the money for purchasing the carbon credits in the vehicle use fees, details of which will be described later.

Automobile manufacturers produce cars. Car leasing companies purchase cars from automobile manufacturers. Carbon dioxide is produced during manufacture of cars. Levies are therefore imposed on the automobile manufacturers; in the present embodiment, however, car leasing companies pay the levies instead of the automobile manufacturers. The car leasing companies use purchased carbon credits to cancel out the whole or part of the levies caused by emission of carbon dioxide during manufacture of cars (hereinafter referred to as "production-carbon (PC)"). The automobile manufacturers can thus have the car leasing companies bear the financial and clerical burden relating to the production-carbon.

Car leasing companies lease a variety of cars using such energy as gasoline, biomethanol, hydrogen, and electricity. Energy providers provide various kinds of energy such as gasoline to cars. Users fill cars with energy for driving the cars at energy stations such as gas (petrol) stations, charging stations, and hydrogen stations.

When an energy provider has provided energy, the car leasing company is notified of the quantity of supplied energy. The supply quantity in the notification is based on a unit quantity depending on the type of energy, such as liter for gasoline or a power amount for electricity. A car leasing company pays the energy fee depending on the energy supply quantity (hereinafter referred by as a "supply fee") to the energy provider. Supply fees are also passed on in vehicle use fees.

Carbon dioxide is also produced when a car consumes energy. In other words, energy itself is also a source of carbon dioxide. Levies are therefore imposed on energy providers, but car leasing companies also pay the levies for the energy instead of the energy providers. The car leasing companies use carbon credits to cancel out carbon dioxide emitted during production of energy (hereinafter referred to as "energy-carbon (EC)"). The energy providers can also have the car leasing companies bear the financial and clerical burden relating to the energy-carbon.

Users need not pay supply fees upon energy supply to cars. As described above, car leasing companies bill users for the supply fees as part of vehicle use fees once a month.

As described above, a user leases a car from a car leasing company for a long term, and pays a vehicle use fee every month to the car leasing company. The vehicle use fee includes, in addition to the supply fee, the charges relating to production-carbon and energy-carbon (to be described later). The user only pays the vehicle use fee, and therefore need not do special clerical procedures relating to carbon dioxide emission.

Users can save vehicle use fees by choosing cars with high energy efficiency and little production-carbon (hereinafter referred to as "eco-cars (ecologically friendly cars)") and energy with little energy-carbon (hereinafter referred to as "clean energy"). Such a mechanism can lead users to decarbonized lifestyles without forcing the users to do troublesome procedures.

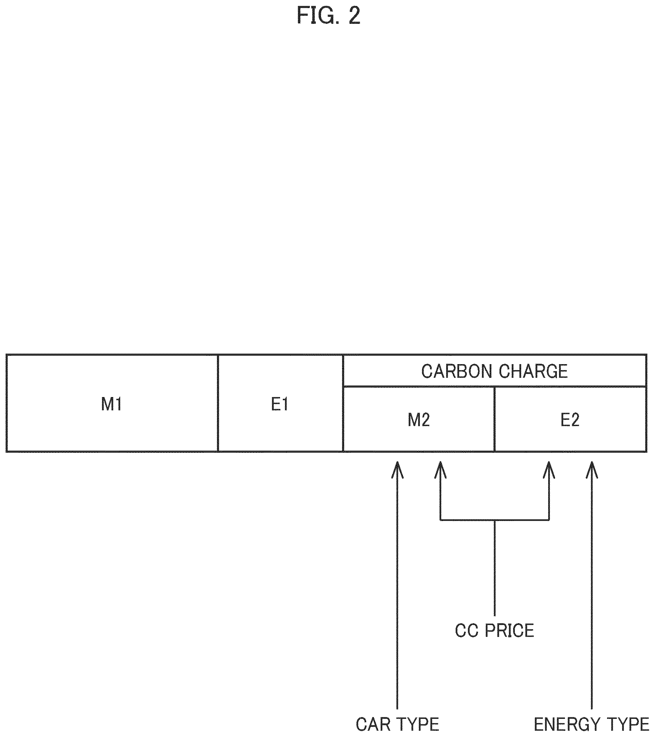

FIG. 2 is a schematic diagram illustrating a structure of a vehicle use fee.

A vehicle use fee includes four kinds of fees M1, E1, M2, and E2. The fee M1 represents a fixed basic fee. The fee E1 represents a supply fee, that is, the fee for energy supplied to the car during a period of one month. When the user has received supply of energy, such as gasoline, hydrogen, or electricity, from an energy provider, the energy provider charges the car leasing company the supply fee. The car leasing company pays the supply fee to the energy provider, and charges the user a supply fee for one month as the fee E1 later.

The fee M2 (first use fee) and the fee E2 (second use fee) represent charges for global warming countermeasures (hereinafter referred to as "carbon charges"). The fee M2 represents a carbon charge relating to production-carbon. When a user has chosen a car with less production-carbon, the fee M2 is lower. The fee M2 is determined by the type of the car and the CC price, details of which will be described later.

The fee E2 represents a carbon charge relating to energy-carbon. When a user has chosen energy with less energy-carbon, the fee E2 is lower. The fee E2 varies depending on the type of energy, the energy supply quantity and the CC price, details of which will be described later.

When a car with more production-carbon is used, the fee M2 is higher. Users can save the vehicle use fees by using cars with little production-carbon and high energy efficiency that use energy with little energy-carbon. If a growth in the demand for eco-cars is triggered by car use fees, the incentive for automobile manufacturers to manufacture eco-cars will be increased. In addition, when eco-cars become widely used, it becomes easier for energy providers to invest in clean energy facilities.

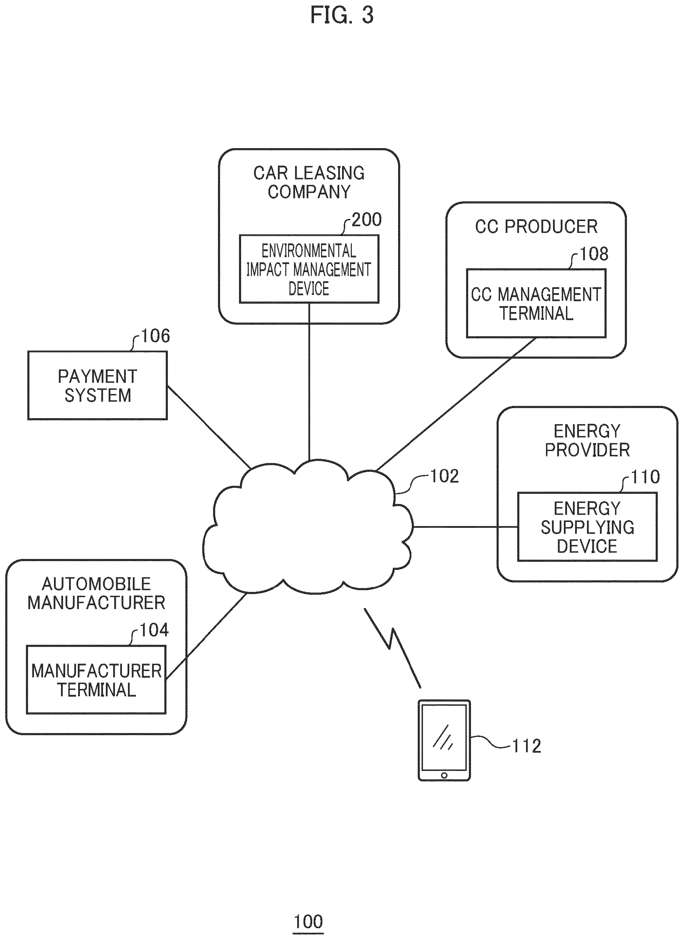

FIG. 3 is a system configuration diagram of the car leasing system 100.

The car leasing system 100 includes an environmental impact management device 200, a manufacturer terminal 104, a payment system 106, a CC management terminal 108, an energy supplying device 110, and a user terminal 112. The environmental impact management device 200, the manufacturer terminal 104, the payment system 106, the CC management terminal 108, the energy supplying device 110, and the user terminal 112 are connected with each other via the Internet 102. The user terminal 112 is a communication terminal used by a user of a car, and may be any computer having a communication function and a display function, such as a smartphone, a tablet computer, a desktop PC, or a laptop PC.

The environmental impact management device 200 is a server managed by a car leasing company and manages car leasing services. Users perform user registration in the environmental impact management device 200 in advance. The users register their name, address, bank account information, credit card number, and the like in the environmental impact management device 200, and the environmental impact management device 200 assigns a user ID to each user. Cars managed by the car leasing company are identified by vehicle IDs.

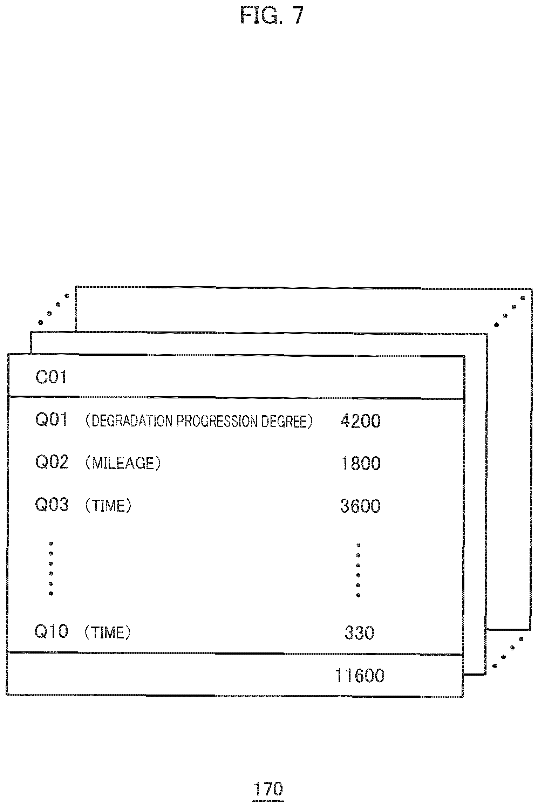

The manufacturer terminal 104 is a communication terminal used by a person in charge in an automobile manufacturer. The automobile manufacturer sells cars to a car leasing company, and a person in charge in the car leasing company assigns a vehicle ID to a newly delivered car and registers it in the stock. In addition, upon delivery of a car, the person in charge in the automobile manufacturer inputs the amount of production-carbon (hereinafter referred to as a "production-carbon value") of the car in the manufacturer terminal 104, and the manufacturer terminal 104 notifies the environmental impact management device 200 of the production-carbon value. The environmental impact management device 200 registers the vehicle ID and the production-carbon value in association with each other, details of which will be described later with reference to FIG. 7.

The payment system 106 is a server operated by a financial institution. When the car leasing company purchases a car from the automobile manufacturer, the environmental impact management device 200 transmits a payment instruction to the payment system 106. The payment system 106 performs a process of deducting the purchase price from the bank account of the car leasing company (purchaser) and depositing the amount into the bank account of the automobile manufacturer. After confirming the payment, the automobile manufacturer delivers the car to the car leasing company.

The CC management terminal 108 is a communication terminal used by a CC producer. The CC producer produces carbon credits by growing sorghum. The CC producer receives approval of the carbon credits from a public institution such as a state institution. The car leasing company purchases carbon credits from the CC producer as described above. In this process, the CC producer registers transfer of the carbon credits from the CC management terminal 108 to the public institution.

The environmental impact management device 200 instructs the payment system 106 to perform payment for purchasing carbon credits. The payment system 106 performs a process of deducting the purchase price of the carbon credits from the bank account of the car leasing company and depositing the amount into the bank account of the CC producer. In addition, the carbon credits are transferred from the CC producer to the car leasing company. The transfer registration of the carbon credits may be performed by the car leasing company.

The energy supplying device 110 is a device installed by an energy provider for supplying energy to cars, such as a gas (petrol) station, a hydrogen station, or a charging station. A car of a user can receive supply of energy from the energy supplying device 110. At supply of energy, the energy supplying device 110 transmits "supply data" including the energy supply quantity, the energy type, the supply fee, the supply date and time, and the like together with the vehicle ID and the user ID to the environmental impact management device 200.

The environmental impact management device 200 instructs the payment system 106 to perform payment in accordance with the supply data. The payment system 106 performs a process of deducting the supply fee from the bank account of the car leasing company and depositing the amount into the bank account of the energy provider.

The environmental impact management device 200 calculates the vehicle use fee every month, and notifies the user terminal 112 of the vehicle use fee. The environmental impact management device 200 also instructs the payment system 106 to perform payment. The payment system 106 performs a process of deducting the vehicle use fee from the bank account of the user and depositing the amount into the bank account of the car leasing company. The environmental impact management device 200 generates a receipt in a form of electronic data, and transmits the receipt to the user terminal 112.

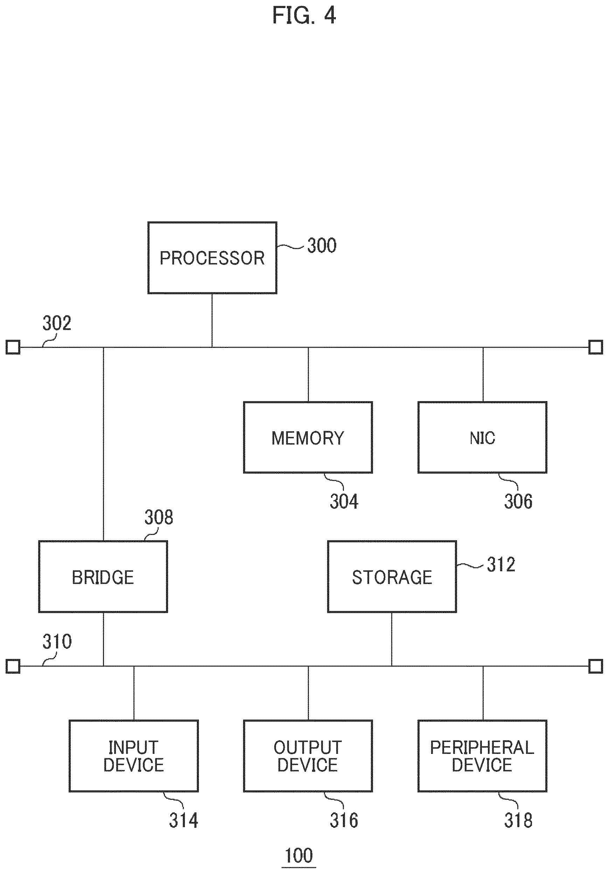

FIG. 4 is a hardware configuration diagram of the environmental impact management device 200.

The environmental impact management device 200 includes a storage 312 that is a nonvolatile memory for storing computer programs, a volatile memory 304 into which programs, data, and the like are loaded, a processor 300 (central processing unit: CPU) including a register, an arithmetic unit, an instruction decoder, and the like for reading and executing programs from the memory 304, and the like. The processor 300 is connected with a relatively high-speed first bus 302. The memory 304 and a network interface card (NIC) are connected with the first bus 302. In addition, other devices such as a graphics processing unit (GPU) may be connected with the first bus 302.

The first bus 302 is connected with a relatively low-speed second bus 310 via a bridge 308. The storage 312 and an output device 316, such as a monitor or a speaker, are connected with the second bus 310. In addition, an input device 314 such as a mouse and a keyboard, and a peripheral device 318 such as a printer may be connected with the second bus 310.

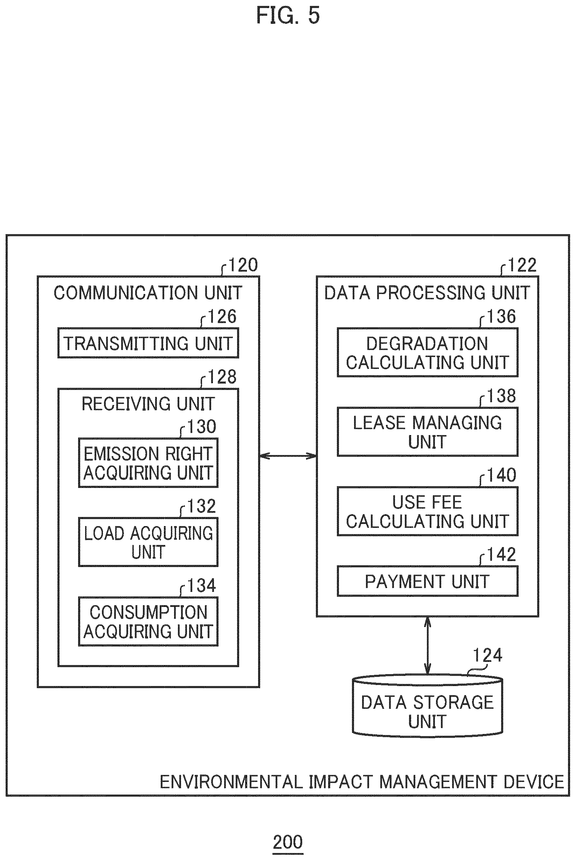

FIG. 5 is a functional block diagram of the environmental impact management device 200.

Respective components of the environmental impact management device 200 are implemented by hardware including arithmetic units such as CPUs and various co-processors, storage devices such as memories and storages, and wire or wireless communication lines connecting the components, and software, stored in the storage devices, for supplying processing instructions to the arithmetic units. Computer programs may be constituted by device drivers, an Operating System, various application programs on upper layers thereof, and libraries providing common functions to the programs.

The blocks described below are not in units of hardware but are in units of functions.

The environmental impact management device 200 includes a communication unit 120, a data processing unit 122, and a data storage unit 124.

The communication unit 120 performs processing for communication with the CC management terminal 108, the energy supplying device 110, the payment system 106, the manufacturer terminal 104, and the user terminal 112. The data storage unit 124 stores various information data. The data processing unit 122 performs various processes on the basis of data obtained by the communication unit 120 and information data stored in the data storage unit 124. The data processing unit 122 also functions as an interface between the communication unit 120 and the data storage unit 124.

The communication unit 120 includes a transmitting unit 126 and a receiving unit 128.

The transmitting unit 126 transmits various data to external devices. The receiving unit 128 receives various data from external devices.

The receiving unit 128 includes an emission right acquiring unit 130, a load acquiring unit 132, and a consumption acquiring unit 134.

The emission right acquiring unit 130 acquires a carbon credit from the CC management terminal 108. More specifically, the CC management terminal 108 registers transfer of the carbon credit, and the emission right acquiring unit 130 receives a notification of transfer registration of the carbon credit. Alternatively, a carbon credit may be transferred from the CC management terminal 108 to the environmental impact management device 200 by a blockchain or the like.

The load acquiring unit 132 receives "manufacture load data" indicating the vehicle ID and the production-carbon value from the manufacturer terminal 104. The consumption acquiring unit 134 receives supply data indicating the user ID, the vehicle ID, and the supply quantity and the type of energy from the energy supplying device 110.

The data processing unit 122 includes a degradation calculating unit 136, a lease managing unit 138, a use fee calculating unit 140, and a payment unit 142.

The degradation calculating unit 136 calculates the "degradation progression degree" of each car. The degradation progression degree is an index indicating the progression of degradation of a car as the car is used, details of which will be described later. The lease managing unit 138 manages leasing of cars. The use fee calculating unit 140 calculates the vehicle use fee. The payment unit 142 transmits various instructions to the payment system 106 to perform payment.

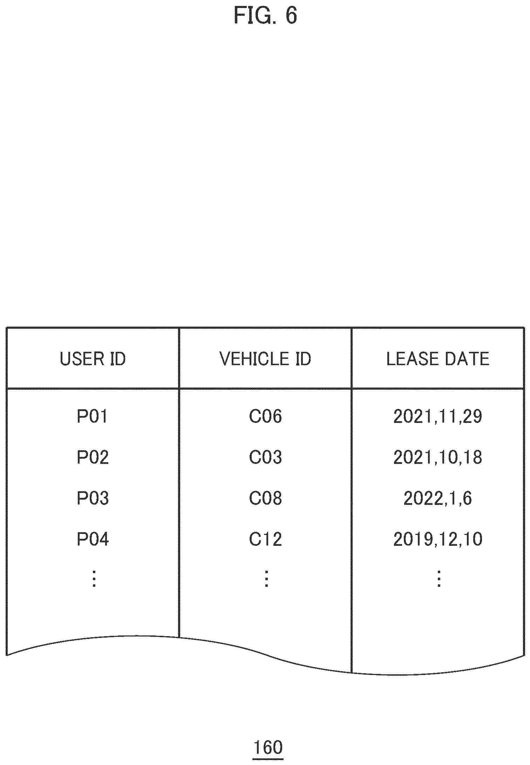

FIG. 6 is a data structure table of lease management information 160.

The lease management information 160 is stored in the data storage unit 124. The car leasing company leases a car to a user. In this case, the lease managing unit 138 registers the user ID, the vehicle ID, and the lease date in association with each other in the lease management information 160. When the user returns the car, the lease managing unit 138 deletes this record from the lease management information 160. The car leasing company in the present embodiment is assumed to lease cars for long terms in units of months or years.

For example, a user with a user ID = P01 (hereinafter referred to as a "user (P01)") has leased a car (C06) with a vehicle ID = C06 on November 29, 2021. In addition, a user (P04) has leased a car (C12) from December 10, 2019. As described above, the users pay the vehicle use fees to the car leasing company every month while the users lease the cars.

FIG. 7 is a data structure table of manufacture load data 170.

The manufacture load data 170 are also stored in the data storage unit 124. The manufacture load data 170 in FIG. 7 indicates the production-carbon of a car (C01). The car (C01) includes components Q01 to Q10. A sum of production-carbons of the components Q01 to Q10 is the production-carbon of the car (C01).

The car (C01) is an electric vehicle (EV), and a component Q01 (first component) is a secondary battery mounted on the car (C01). The production-carbon value (first emission) of the component Q01 (secondary battery) is "4200". Note that the quantity of energy-carbon produced during generation of a unit quantity of energy will be referred to as an "energy-carbon value", and the production-carbon value and the energy-carbon value are collectively referred to as a "carbon value". The carbon value is a numerical value expressing the weight of carbon dioxide as an index. For example, R kilograms of carbon dioxide may be expressed by a carbon value "1".

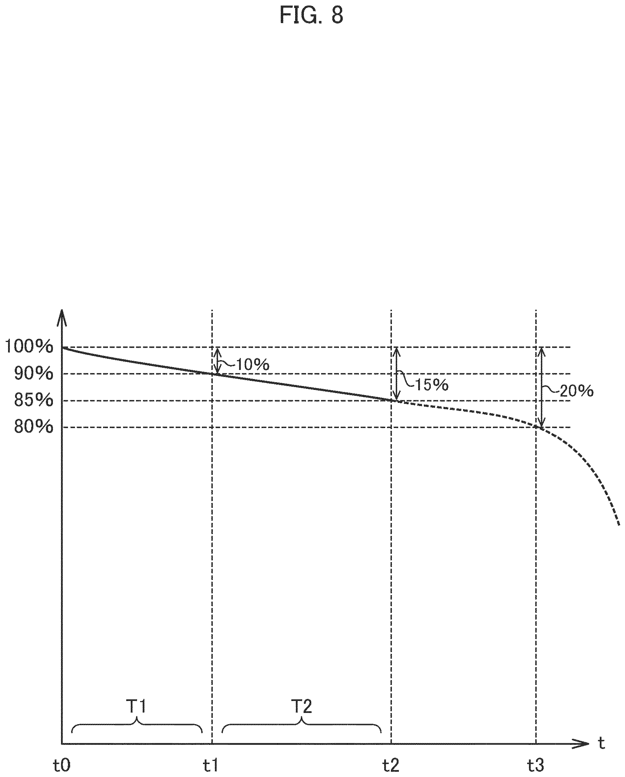

For the component Q01 (secondary battery), a levy depending on the production-carbon value "4200" is imposed. When a user leases the car (C01), the user incurs part of the levy relating to the production-carbon of the component Q01 (secondary battery) depending on the degradation progression degree of the component Q01 during the use period. A method for calculating the amount to be incurred based on the degradation progression degree will be described later with reference to FIG. 8.

A component Q02 (second component) is the tires of the car (C01). The production-carbon value (second emission) of the component Q02 (tires) is "1800". The use fee calculating unit 140 calculates the amount to be incurred on the basis of the mileage and the production-carbon of the tires. For example, assume that the maximum mileage estimated for the tires of the car (C01) is 100,000 kilometers. When a user (P05) has leased the car (C01) and driven 200 kilometers in a month, the use fee calculating unit 140 calculates, as the amount to be incurred by the user (P05), a carbon value "3.6" that is 0.2% (= 200/100,000) of the production-carbon value "1,800". When the CC price per carbon value T is X [JPY], the use fee calculating unit 140 includes X×(3.6/T) [JPY] as part of the fee M2.

A component Q03 is the body of the car (C01). The production-carbon value of the component Q03 (body) is "3,000". Assume that an estimated usable period of the component Q03 (body) is 120 months (ten years). When the user (P05) has leased the car (C01) for one months, the use fee calculating unit 140 calculates, as the amount to be incurred by the user (P05), a carbon value "30" that is 1/120 of the production-carbon value "3,600". In this case, the use fee calculating unit 140 includes X×(30/T) [JPY] as the amount to be incurred for the component Q03 (body) in the fee M2.

The sum of the production-carbon values of the components Q01 to Q10 is the production-carbon value of the car (C01). According to FIG. 7, the production-carbon value of the car (C01) is "11,600". When the car leasing company purchases the car (C01), the car leasing company cancels out a levy based on the production-carbon "11,600" of the car (C01) by carbon credits. The car leasing company may pay the remaining amount that cannot be cancelled out to the public institution or the like.

When the user (P05) has leased the car (C01), the use fee calculating unit 140 calculates the amount to be incurred by the user for the production-carbon of each components each month, to calculate the fee M2. The user (P05) incurs a small amount at a time from the levy caused by the production-carbon depending on the quantity of use of the car (C01), and the car leasing company recovers the incurred levy or, in other words, the purchase price of carbon credits by the fee M2.

FIG. 8 is a graph schematically illustrating an aging degradation pattern of a secondary battery.

The horizontal axis represents time, and the vertical axis represents the performance of the component Q01 (secondary battery). The secondary battery performance is expressed by internal resistance, discharge voltage, State of Health (SOH), and the like as indices. The SOH is defined as "full charge capacity / initial nominal capacity". Thus, the SOH is a ratio of a full charge capacity resulting from degradation to an initial full charge capacity (initial nominal capacity). As a secondary battery degrades, its full charge capacity decreases.

Time point t0 corresponds to the timing of the beginning of use of a secondary battery subjected to measurement. In the present embodiment, "1-SOH (full charge capacity / initial nominal capacity)" is defined as degradation level. At time point t0, the degradation level is 0[0]. Assume that the secondary battery is to be replaced when the degradation level of the secondary battery is 20[%] or higher, or in other words, when the SOH is 80[%] or lower. The degradation level at replacement, which is 20[%] in the example above, will be referred to as a "degradation threshold".

Time point t1 is a time point a predetermined period after time point t0, such as one year after time point t0. At this point, the SOH is 90[%], and the degradation level is therefore 10[%]. During a period T1 (time point t0 to time point t1), the degradation level has increased from 0[%] to 10[%]. In this case the degradation progression degree during the period T1 is 10[%].

Time point t2 is a time point a predetermined period (one year) after time point t1. The degradation level at time point t2 is assumed to be 15[0]. The degradation progression degree of the component Q01 (secondary battery) during a period T2 (time point t1 to time point t2) is 5[%].

According to FIG. 7, the production-carbon value of the component Q01 (secondary battery) is "4200". Assume that the degradation progression degree per month of the component Q01 (secondary battery) when the user (P05) has leased the car (C01) is 1[%]. In addition, assume that the degradation threshold of the component Q01 (secondary battery) is 20 [%]. In this case, the use fee calculating unit 140 calculates, as the amount to be incurred by the user (P05), a carbon value "210" that is 1/20 of the carbon value "4200". When the CC price per carbon value T is X [JPY], the use fee calculating unit 140 includes X×(210/T) [JPY] as a carbon charge for the production-carbon of the component Q01 (secondary battery) in the fee M2.

The car leasing company leases a measurement device for measuring the SOH of a secondary battery together with the car (C01) to the user (P05). The measurement device automatically measures the SOH of the component Q01 (secondary battery) on a predetermined date and time at the end of each month, and notifies the environmental impact management device 200 of the SOH (degradation level). The degradation calculating unit 136 of the environmental impact management device 200 calculates the degradation progression degree per month on the basis of the degradation level received from the measurement device.

For example, when the degradation level measured at the end of February is 4.9[%] and the degradation level measured at the end of March is 5.2 [%], the degradation calculating unit 136 calculates the degradation progression degree of the component Q01 (secondary battery) in March to be 0.3[%] (= 5.2-4.9). The use fee calculating unit 140 calculates the fee M2 for the component Q01 (secondary battery) on the basis of the degradation progression degree.

In addition, when the energy supplying device 110 that is a charging station charges the car (C01), the energy supplying device 110 may measure the SOH (degradation level) of the component Q01 (secondary battery), and notify the environmental impact management device 200 of the SOH (degradation level). The energy supplying device 110 may include a measurement unit (not illustrated) for measuring the SOH, and a notification unit (not illustrated) for notifying the environmental impact management device 200 of the SOH.

The degradation calculating unit 136 of the environmental impact management device 200 may calculate the degradation progression degree per month on the basis of the latest degradation level received from the energy supplying device 110. For example, when the degradation level measured at the last charging in February is 2.5[%] and the degradation level measured at the last charging in March is 3.1[%], the degradation calculating unit 136 calculates the degradation progression degree of the component Q01 (secondary battery) in March to be 0.6[%] (= 3.1-2.5).

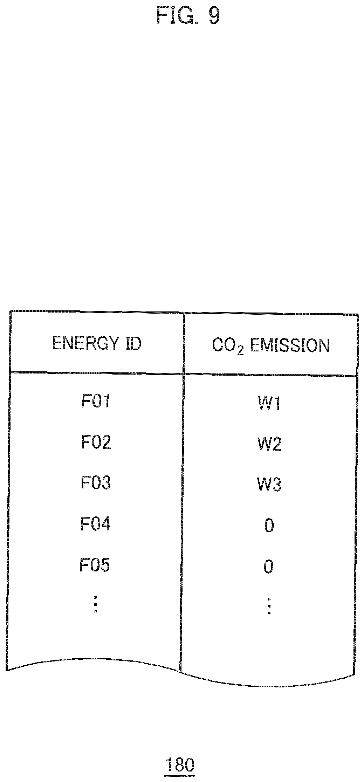

FIG. 9 is a data structure table of a load table 180.

The load table 180 is stored in the data storage unit 124. The load table 180 defines the energy type and the energy-carbon value in association with each other. The energy-carbon value indicates the carbon dioxide emission per unit quantity. The energy type is identified by the energy ID.

An energy ID = F01 is associated with gasoline. The energy (F01) emits W1 kilograms of carbon dioxide per liter. Energy (F02) corresponds to light oil, and emits W2 kilograms of carbon dioxide per liter.

Upon filling the car (C01) with the energy (F01: gasoline), the energy supplying device 110 notifies the environmental impact management device 200 of the supply quantity together with the vehicle ID. The use fee calculating unit 140 of the environmental impact management device 200 calculates a total of energy-carbon values (hereinafter referred to as an "emitted carbon value") depending on the energy supply quantity on the basis of the supply quantity and the load table 180. For example, the emitted carbon value when 20 liters of the energy (F01 : gasoline) is supplied is "W1×20".

The energy-carbon of hydrogen and biomethanol is zero. In the case of electrical energy, the carbon dioxide emission per unit power is defined as the energy-carbon value. For example, in the case of electrical energy generated by solar cells, the energy-carbon value is zero. Electrical energy generated by so-called renewable energy such as wind power generation or geothermal power generation does not emit carbon dioxide. In contrast, coal fired power generation emits carbon dioxide. When supplying electrical energy to a car, the energy supplying device 110 also notifies the environmental impact management device 200 of the energy source that generated the electrical energy.

In one example, assume that the energy supplying device 110 has supplied 20 liter of gasoline to a car (C02). The emitted carbon value in this case is "W1×20". When the CC price per carbon value T is X [JPY], the use fee calculating unit 140 includes X×(W1×20/T) [JPY] in the fee E2.

Assume that the car (C01) is an EV. Also assume that the energy supplying device 110 has supplied electrical energy of "unit power" × 4 to the car (C01). The unit power used here is a reference amount such as 100 kilowatt-hour. Assume that 30% of the power supplied to the car (C01) by the energy supplying device 110 is from photovoltaic power generation and 70% thereof is from coal fired power generation.

Assume that the energy-carbon of photovoltaic power generation is zero, and the energy-carbon value of coal fired power generation is Y per unit power. In this case, the use fee calculating unit 140 refers to the load table 180, and calculates the emitted carbon value to be "0.28Y (= 0×0.3×4+Y×0.7×4)". When the CC price per carbon value T is X [JPY], the use fee calculating unit 140 includes X×(0.28Y/T) [JPY] in the fee E2.

Users can reduce the fee E2 by using clean energy.

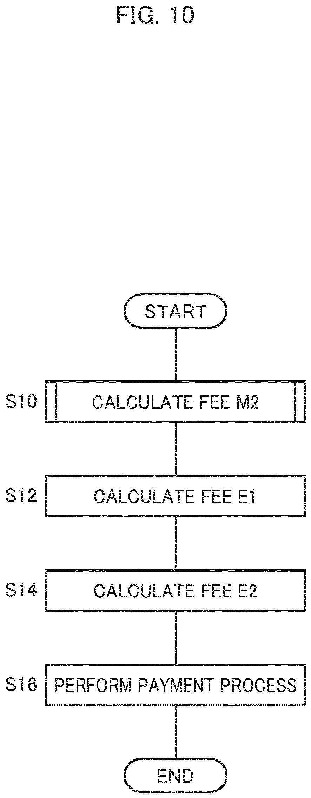

FIG. 10 is a flowchart illustrating processes of fee calculation.

The fee calculation is performed periodically. In the present embodiment, the use fee calculating unit 140 performs the fee calculation illustrated in FIG. 10 for each user at the end of every month. Herein, assume a case where the vehicle use fee (monthly fee) is calculated for the user (P05) leasing the car (C01) for explanation.

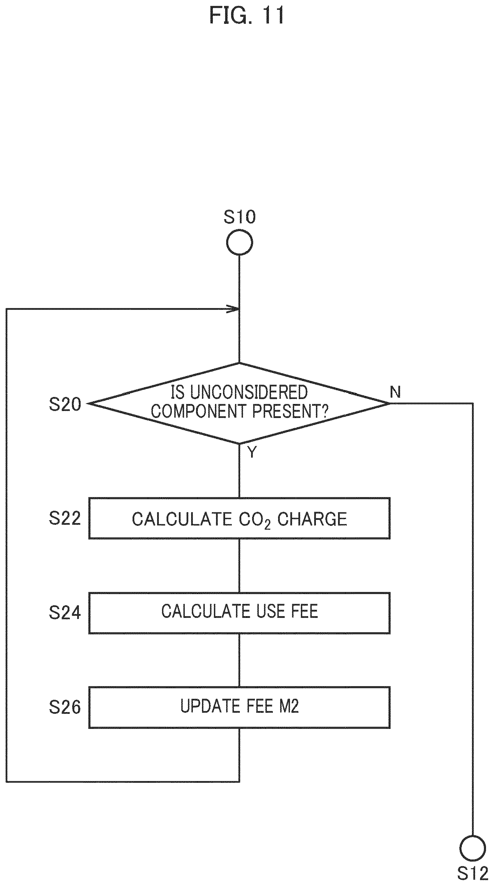

The use fee calculating unit 140 first calculates the fee M2 (S10) . The fee M2 is a charge based on production-carbon among the carbon charges. Details of the method for calculating the fee M2 will be described with reference to FIG. 11.

Subsequently, the use fee calculating unit 140 calculates the fee E1 (S12). When the user (P05) has supplied energy to the car (C01), the energy supplying device 110 notifies the environmental impact management device 200 of the supply fee depending on the supply quantity. The use fee calculating unit 140 calculates a total value of supply fees for one month as the fee E1.

After calculating the fee E1, the use fee calculating unit 140 calculates the fee E2 (S14). As described above, the use fee calculating unit 140 refers to the load table 180, and calculates the fee E1 on the basis of the energy supply quantity, the energy type, and the CC price at the time of fee calculation.

The use fee calculating unit 140 calculates, as the vehicle use fee, addition of the fee E1, the fee M2, and the fee E2 to the fee M1, which is a fixed fee. The payment unit 142 instructs the payment system 106 to perform the process of deducting the vehicle use fee from the bank account of the user (P05) and depositing the amount to the bank account of the car leasing company.

FIG. 11 is a flowchart illustrating the process of calculating the fee M2 in S10 of FIG. 10 in detail.

The use fee calculating unit 140 refers to the manufacture load data 170 relating to the car (C01), and if an unconsidered component is present, or in other words, if a component for which the production-carbon value has not been calculated is present (Y in S20), calculates the production-carbon value of the component (S22). In the case of the component Q01 (secondary battery), the degradation calculating unit 136 calculates the degradation progression degree. The use fee calculating unit 140 calculates the production-carbon value per month on the basis of the production-carbon value and the degradation progression degree of the component Q01 (secondary battery). The calculation result is temporarily stored in a memory.

In the case of the component Q02 (tires), the use fee calculating unit 140 calculates the production-carbon value per month on the basis of the production-carbon value and the mileage of the component Q02. In the case of the component Q03, the use fee calculating unit 140 calculates the production-carbon value per month on the basis of the production-carbon value of the component Q03 and hours of use.

As described above, an amount to be incurred for the production-carbon value is calculated on the basis of the maximum mileage and the mileage per month of the component Q02 (tires). The maximum mileage may be set to any value on the basis of performance experiment by the designer of the component Q02 (tires). Alternatively, a test run may be performed with a prototype of a car, and the mileage of the test run until the degradation level of the component Q02 (tires) reaches the degradation threshold may be set as the maximum mileage.

The use fee calculating unit 140 calculates the use fee or each component on the basis of the production-carbon value per month of the component and the CC price (S24), and adds the use fees to the fee M2 (S26) . When the calculation of the use fee has been completed for all the components (N in S20), the process in S10 is completed. In this manner, the fee M2 is calculated on the basis of the production-carbon values and the quantities of use (the degradation progression degree, the mileage, hours of use, etc.) of the individual components Q01 to Q10 of the car (C01) .

### [Overview]

The car leasing system 100 has been described above with reference to the embodiment.

In the car leasing system 100, a user of a car is periodically billed for the vehicle use fee by the environmental impact management device 200 (car leasing company), and the vehicle use fee is deducted from the bank account of the user. Thus, the user bears no procedural burden caused by carbon dioxide emission. Furthermore, because the supply fee of energy is paid together as part of the vehicle use fee in addition to the carbon charges (the fees M2 and E2), the user need not perform the procedures for payment when receiving energy supply from the energy supplying device 110.

In billing of the vehicle use fee, the payment unit 142 issues a receipt indicating the breakdowns of the fees M1, E1, M2, and E2. The transmitting unit 126 transmits electronic data of the receipt generated by the payment unit 142 to the user terminal 112. The user can know the fees M1, E1, M2, and E2 by checking the receipt. A user can reduce the fee M2 by selecting a car with less production-carbon, that is, in particular, a car constituted by components with less production-carbon. As a result, eco-cars with less production-carbon become likely to be preferred even though the manufacture cost is high, and the car leasing system 100 can therefore promote widespread use of eco-cars having less environmental impact.

In addition, a user can reduce the fee E2 by selecting clean energy with less energy-carbon. Because the fee E1 is high when the unit price of energy high but the fee E2 is low in the case of clean energy, clean energy such as renewable energy becomes likely to be preferred. As clean energy is more likely to be selected, it becomes easier for energy providers to invest in clean energy facilities.

When a user uses a hybrid car that can be driven by either hydrogen or gasoline, the user will proactively select hydrogen rather than gasoline in order to reduce the fee E2. As a result, even when the number of installed hydrogen stations is small, the user will actively search for and use hydrogen stations, and such behavioral change of users encourages capital investment in hydrogen stations.

As a result of making the vehicle use fee variable depending on the carbon dioxide emission, it is possible to lead users to choose cars with high energy efficiency, cars with less environmental load during manufacture thereof, and energy with less environmental load, thereby the society can be gradually changed toward a low-carbon, recycling-based society.

Even a levy for production-carbon is imposed on the automobile manufacturer, the car leasing company pays the levy for the automobile manufacturer. Thus, even if the automobile manufacturer manufactures cars with large environmental impact, there is no direct disadvantage. If, however, users proactively choose eco-cars, car leasing companies will purchase more eco-cars, and consequently, automobile manufacturers will also shift toward manufacture focusing on eco-cars. It is therefore possible to lead automobile manufacturers to increase manufacture of eco-cars in accordance with the market mechanism without forcing the automobile manufacturers to shift toward manufacture of eco-cars.

The same is applicable to energy providers. Car leasing companies also incur levies based on energy-carbon. Users will prefer clean energy in order to reduce vehicle use fees. It is therefore possible to encourage energy providers to invest in clean energy facilities in accordance with the market mechanism. For the energy providers as well, it becomes easier to invest in facilities after checking the users' preference without being forced by penalties of levies.

Because car leasing companies bear the levies for automobile manufacturers and energy providers, the car leasing companies need a large quantity of carbon credits. The car leasing companies may directly pay the levies for production-carbon and energy-carbon, but may also use carbon credits to cancel out the levies. In addition, as a result of making a contract with a car leasing company that is a large customer of carbon credits, CC producers need not raise funds and do sales activities, which makes it easier for CC producers to make capital investment in carbon credit production.

Car leasing companies can obtain carbon credits at stable CC prices by promising continuous purchase in large quantities. In the case where a biofuel is produced from sorghum, a CC producer not only produces carbon credits but can also have a role of an energy provider. If the demand for biofuels increases, in addition to the demand for carbon credits, it becomes further reasonable for a CC producer to grow sorghum, which further promotes sorghum cultivation and widespread use of biofuels.

In the present embodiment, production-carbon is managed for each component of a car. When a component of a car is replaced, the use fee calculating unit 140 calculates the vehicle use fee on the basis of production-carbon of the new component. For example, when the component Q01 (secondary battery A) of the car (C01) is replaced with a new secondary battery B in January, the fee M2 in February is calculated on the basis of the production-carbon and the degradation progression degree of the new secondary battery B. Such a control method facilitates reduction of the vehicle use fees in the case of cars that can be used for long periods with components replaced as necessary.

According to the car leasing system 100, carbon charges caused by production-carbon of a car are reflected in the fee M2. When a secondary battery with high energy efficiency is used in a car, the fee E1 becomes lower. Even if the energy efficiency is high, however, the fee M2 becomes higher for a secondary battery that degrades more quickly. The environmental impact of a secondary battery is affected not only by production-carbon and energy efficiency but also by durability. According to the car leasing system 100, use of a secondary battery that can be used for a long term reduces the fee M2.

The present invention is not limited to the embodiment described above and modifications thereof, and any component thereof can be modified and embodied without departing from the scope of the invention. Components described in the embodiment and modifications can be combined as appropriate to form various other embodiments. Some components may be omitted from the components presented in the embodiment and modifications.

### [Modifications]

In the description of the present embodiment, users are charged for environmental impact caused by carbon dioxide emissions. The system of the car leasing system 100 is not limited to carbon dioxide but is also applicable to other chemicals that have impact on the environment. The system may be applied to various greenhouse gases other than carbon dioxide, such as chlorofluorocarbon, methane, and nitric oxide. In addition, various chemicals such as nitrogen compounds such as ammonia and nitrogen dioxide, and heavy metals may be considered.

While it is assumed that carbon credits are produced by growing sorghum in the description of the present embodiment, production of carbon credits is not limited to sorghum but carbon credits may also be produced by growing plants such as algae and fungi, or microorganisms.

In the lease management information 160, a return date may be recorded in addition to the lease date. Recording of the lease date and the return date enables management of the period during which a car is leased for each user. In addition, such services as volume discounts for users who has leased many cars or users who lease a plurality of cars at the same time may be provided.

In the description of the present embodiment, a levy caused by energy-carbon is imposed. In a modification, a levy caused by energy-carbon may not be imposed. If the use fee calculating unit 140 sets fees so that the fee E2 is lower when clean energy is selected, users are likely to select clean energy. If the demand for clean energy increases, it becomes easier for energy providers to raise investment in clean energy.

In the description of the present embodiment, the payment system 106 performs money transfer through banks. In a modification, the payment unit 142 may perform money transfer by a peer-to-peer method using a blockchain or the like. For example, for payment of the vehicle use fee from a user to a car leasing company, the user may instruct money transfer in cryptocurrency by using the user terminal 112, and the car leasing company may receive the vehicle use fee in cryptocurrency as a result of authentication of transaction of a block describing the money transfer instruction in a communication network.

A charge for production-carbon may be calculated on the basis of a parameter other than the degradation progression degree, the mileage, and hours of use. For example, when an estimated maximum number of times of battery charging of the component Q01 (secondary battery) is K and the number of times of battery charging per month is L, L/K of the production-carbon of the component Q01 (secondary battery) may be assigned to the user. In addition, the degradation progression degree may be expressed as an index on the basis of an oil consumption amount or the number of times of oil replacement for an engine, or on the basis of the groove depth for tires.

For example the tire groove depth at the end of January may be measured as corresponding to a degradation level B1 and the tire groove depth at the end of February may be measured as corresponding to a degradation level B2 by a measurement device, and the degradation calculating unit 136 may then calculate the difference between the degradation level B2 and the degradation level B1 as the degradation progression degree of the tires in February. A test run may be performed with a prototype of a car, the tire groove depth at the start of the run may be defined as a degradation level B3, and the tire groove depth when the run has been performed until the degradation level of the secondary battery reaches the degradation threshold may be defined as a degradation level B4 (<B3). "B3-B4" may be defined as a maximum degradation range BM. When the degradation progression degree per month is represented by BX, a charge for the production-carbon value per month may be calculated on the basis of BX/BM.

In the description of the present embodiment, the energy supplying device 110 transmits supply data indicating the energy supply quantity and the energy type to the environmental impact management device 200, and the environmental impact management device 200 calculates the emitted carbon value on the basis of the supply data and the load table 180.

The energy supplying device 110 may include a carbon value calculating unit (not illustrated) that calculates the emitted carbon value together with the energy supply quantity. The notification unit (not illustrated) of the energy supplying device 110 may notify the environmental impact management device 200 of the user ID, the vehicle ID, the supply fee, the energy supply quantity, and the emitted carbon value, and the use fee calculating unit 140 of the environmental impact management device 200 may calculate the fee E2 on the basis of the emitted carbon value in the notification and the load table 180.

The energy supplying device 110 may include a price receiving unit (not illustrated). The price receiving unit may further obtain a market price of a carbon credit as the CC price from an external site, and calculate the fee E2 on the basis of the emitted carbon value and the CC price. The notification unit of the energy supplying device 110 may notify the environmental impact management device 200 of the fee E2 together with the fee E1 (supply fee).

In the description of the present embodiment, a car leasing company purchases carbon credits from a CC producer through over-the-counter (OTC) trading. The CC price in this case may be a fixed price agreed by the car leasing company and the CC producer. The CC price (trading price) may be revised every unit period, such as every year. A car leasing company may purchase carbon credits from the market. In this case, the CC price varies depending on supply and demand.

In the present embodiment, a use fee is calculated for each component on the basis of the production-carbon of each component, and a sum of the calculated use fees is used as the fee M2. In a modification, the use fee calculating unit 140 may calculate the fee M2 on the basis of the production-carbon of the whole car. For example, assume that the production-carbon value of the car (C02) is N, and that an estimated usable period of the car (C02) is 360 months. In this case, the use fee calculating unit 140 calculates the production-carbon value per month to be N/360. The use fee calculating unit 140 may calculate the fee M2 on the basis of N/360 and the CC price.

The use fee calculating unit 140 may calculate the fee M2 on the basis of the maximum mileage (the distance a car can run until its end of life) of a car. Assume, for example, that the production-carbon value of the car (C02) is N, and that an estimated maximum mileage of the car (C02) is EM kilometers. Also assume that the mileage for a month of the car (C02) was E1 kilometers. In this case, the use fee calculating unit 140 calculates the production-carbon value per month to be N×E1/EM. The use fee calculating unit 140 may calculate the fee M2 on the basis of N×E1/EM and the CC price.

The use fee calculating unit 140 may calculate the production-carbon of a car per month (unit period) on the basis of the degradation progression degree of a representative component. For example, in a case where the car (C01) is an EV, the use fee calculating unit 140 may calculate the fee M2 on the basis of the degradation progression degree of the component Q01 (secondary battery) of the car (C01).

Specifically, assume, firstly, that the degradation threshold of the component Q01 (secondary battery) is 20 [%]. When the production-carbon value of the car (C01) is N and the degradation progression degree of the component Q01 (secondary battery) in a month was j[%], the use fee calculating unit 140 calculates the production-carbon value for the month to be N×j/20. The use fee calculating unit 140 may calculate the fee M2 on the basis of N×j/20 and the CC price. In this manner, the quantity of use of a car may be calculated on the basis of the degradation progression degree of the secondary battery, which is a representative component of the car. The use fee calculating unit 140 may calculate the fee M2 on the basis of the production-carbon value of the car, the degradation progression degree of the secondary battery, and the CC price.

The data processing unit 122 of the environmental impact management device 200 may include a suggestion unit (not illustrated). The suggestion unit gives a suggestion on how to reduce the vehicle use fee to the user. For example, the suggestion unit may suggest, to a user who often wastes energy by frequent, sudden acceleration and braking, that the fee E1 can be reduced by making acceleration and deceleration gentler. When the production-carbon of a new-model car is smaller than the production-carbon of a car in use by a predetermined amount or larger, the suggestion unit may suggest switching (changing contract) to the new-model car.

Furthermore, in a case of a car that can use two or more types of energy such as gasoline and electricity or gasoline and hydrogen, the suggestion unit may suggest to the user that energy with lower environmental impact should be used. The suggestion unit may provide a location map of energy supplying devices 110 to the user, and suggest to the user that hydrogen should be supplied when there is a hydrogen station nearby.

In the description of the present embodiment, a business of leasing cars in periods of months to years is assumed. Alternatively, cars may be rented as rental cars for short periods of several hours to several days. In this case as well, the use fee calculating unit 140 may calculate the fees M1, E1, M2, and E2 on the basis of the rental period of each car.

A levy caused by chemical releases such as carbon dioxide release may be incurred by an automobile manufacturer itself instead of a car leasing company. In this case, the automobile manufacturer may cancel out the whole or part of the levy by purchasing a carbon credit from a car leasing company.

In the description of the present embodiment, the energy supplying device 110 charges the car leasing company the supply fee, and the car leasing company charges the user the supply fee as part (fee E1) of the vehicle use fee. In a modification, the user may pay the supply fee to the energy provider. In addition, the user may also pay a levy caused by energy-carbon directly to the energy provider.

As described above, the method of managing environmental impact performed by the car leasing system 100 or, in particular, the environmental impact management device 200 is also applicable to leasing other than that of cars. In addition to leasing, the environmental impact management device 200 is also applicable to a system of use of one article by a plurality of users each paying a use fee, such as sharing and rental.

### <Ships>

In a case of a large ship used for a shipping business, a ship owner purchases a ship from a shipbuilding company. The ship owner raises funds from a financial institution as necessary. The ship owner leases the purchased ship to a shipping company. The shipping company operates the ship for freight transportation, and receives shipping fees from shippers. The ship owner leases the ship to the shipping company and receives a charter fee therefrom. In application to the model of the car leasing system 100 illustrated in FIG. 1, the shipbuilding company corresponds to the "automobile manufacturer", the ship owner corresponds to the "car leasing company", and the shipping company corresponds to the "user".

Assume that X1 container ships are manufactured each year in the world. Assume that the cost for building one container ship is Y1 [JPY]. Assume that the total amount of production-carbon emitted each year by building container ships is Z1 [tons]. Also assume that the price of carbon credits per one ton of carbon is C1 [JPY]. As a result of calculation on the assumptions above, the amount Z2 of production-carbon produced by building one container ship is Z2 = Z1/X1. As a result of converting the amount Z2 into carbon credits, the cost C2 caused by the production-carbon of one container ship is C2 = C1×Z2.

When the service life of a container ship is T1 [years], the amount K1 to be incurred each year of the cost for building the container ship and the charge for production-carbon is K1 = (Y1+C2)/T1. Assuming X1 = 500, Y1 = 7 billion [JPY], Z1 = 600,000, and C1 = 10,000 [JPY], the cost C2 caused by the production-carbon of one container ship is estimated to be C2 = 47 million [JPY]. In this cost, Y1/T1 obtained by dividing the cost Y1 for building the container ship by the service life T1 is Y1/T1 = 46.7 million [JPY]. Because the carbon charge (fee M2) caused by the production-carbon is therefore about 300,000 [JPY] (4700-4670), it appears that the impression of the burden on the shipping company is not increased much even when the carbon charge is included in the charter fee.

A carbon charge (fee E2) for energy-carbon is also similar to that in the case of car leasing. Assume that the total amount of energy-carbon emitted each year by operations of container ships in the world is Z3 [tons]. When the number of container ships in the world is X2, the amount Z4 of energy-carbon per container ship is Z4 = Z3/X2. As a result of converting the amount Z4 into carbon credits, the cost C3 caused by the energy-carbon of one container ship each year is C3 = C1×Z4. The cost for the energy-carbon is also added to the charter fee.

The energy-carbon of a container ship using methanol as an energy source is smaller than that of a container ship using heavy oil as an energy source. The fuel cost of methanol, however, is higher than that of heavy oil. When the cost caused by energy-carbon is high, it will be economical rational for a shipping company to select methanol even in view of the difference in fuel cost.

### <Buildings>

In a case of a building or, in particular, an office building or a large housing complex, a construction company first constructs a building. A real estate company purchases the building and rents rooms to tenants. The real estate company receives rents from the tenants. The real estate company covers the land purchase cost and the construction cost from the rents. In application to the model of the car leasing system 100 illustrated in FIG. 1, the construction company corresponds to the "automobile manufacturer", the real estate company corresponds to the "car leasing company", and the tenants corresponds to the "users".

The construction cost of a building includes the cost for constructing the building and the cost for land acquisition. In addition, construction causes production-carbon through transportation and manufacture of materials. The cost for production-carbon is included in the rents.

Management of the building also causes energy-carbon through use of air conditioning equipment, lighting equipment, and the like. In a case where the real estate company operates the environmental impact management device 200, the environmental impact management device 200 may determine the rents in view of the construction cost of the building, the production-carbon, and the energy-carbon. For example, in a case of a well-insulated building, the construction cost is high but the energy-carbon is small, and the carbon charge (fee E2) for the energy-carbon can be lowered. Greening of a building is expected to produce similar effects.

As described above, while leasing of cars or ships is assumed in the description of the present embodiment, the present invention is not limited thereto and may be applied to any driven machinery driven by some energy. Other examples of driven machinery include aircraft, agricultural machinery, office equipment such as copying machines, machine tools, lighting, and television sets.

The present invention is not limited to real estate but is also applicable to stationary articles other than driven machinery. For example, when such an article as a desk, a chair, or a statue is leased, the use fee calculating unit 140 may calculate the use fee on the basis of the fees M1 and M2. In this case as well, the fee M2 is calculated on the basis of the production-carbon value of the article and the CC price.

Articles to be leased are not limited to cars (end products), but may be components of cars. For example, "modules included in an end product" such as a battery, a body, and tires may be leased. Alternatively, a combination of a plurality of products may be leased. For example, a lifestyle in which a house, home electric appliances, a car, a sofa, and the like are leased together, and a monthly use fee is paid on the basis of the production-carbon and the energy-carbon may be considered.

## Claims

1. An environmental impact management device comprising:
an emission right acquiring unit to acquire emission right data indicating a right to emit a predetermined amount of chemical substance;
a load acquiring unit to acquire manufacture load data indicating an amount of the chemical substance emitted by manufacture of an article; and
a use fee calculating unit to calculate a use fee of the article on the basis of a price of the emission right data and the amount of the chemical substance emitted by manufacture of the article.

2. The environmental impact management device according to claim 1, wherein the chemical substance is a greenhouse gas.

3. The environmental impact management device according to claim 1 or 2, wherein the use fee calculating unit calculates the use fee of the article on the basis of the price of the emission right data, the amount of the chemical substance emitted by manufacture of the article, and a quantity of use of the article.

4. The environmental impact management device according to claim 3, further comprising:
a degradation calculating unit to calculate a degradation progression degree of the article resulting from use of the article, wherein
the use fee calculating unit calculates the use fee of the article on the basis of the price of the emission right data, the amount of the chemical substance emitted by manufacture of the article, and the degradation progression degree of the article resulting from the use.

5. The environmental impact management device according to claim 1, wherein
the load acquiring unit acquires a first emission and a second emission as the manufacture load data, the first emission being an amount of the chemical substance emitted by manufacture of a first component of the article, the second emission being an amount of the chemical substance emitted by manufacture of a second component of the article, and
the use fee calculating unit calculates the use fee of the article on the basis of the price of the emission right data, the first emission, and the second emission.

6. The environmental impact management device according to claim 5, further comprising:
a degradation calculating unit to calculate a degradation progression degree of each of the first component and the second component resulting from use of the article, wherein
the use fee calculating unit calculates the use fee of the article on the basis of the price of the emission right data, the first emission, the second emission, and the degradation progression degrees of the first component and the second component.

7. The environmental impact management device according to claim 1, wherein the use fee calculating unit refers to a load table defining types of energy with emissions of the chemical substance, and calculates the use fee of the article depending on a type and a supply quantity of energy supplied to the article.

8. The environmental impact management device according to claim 1, further comprising:
a payment unit to cancel out a whole or part of a levy imposed depending on the emission of the chemical substance by the emission right data.

9. An environmental impact management device comprising:
an emission right acquiring unit to acquire emission right data indicating a right to emit a predetermined amount of chemical substance;
a consumption acquiring unit to acquire supply data indicating a type and a supply quantity of energy supplied to an article; and
a use fee calculating unit to refer to a load table defining types of energy with emissions of the chemical substance, and calculate a use fee of the article on the basis of a price of the emission right data, and the type and the supply quantity of the energy.

10. An environmental impact management device comprising:
an emission right acquiring unit to acquire emission right data indicating a right to emit a predetermined amount of chemical substance;
a load acquiring unit to acquire manufacture load data indicating an amount of the chemical substance emitted by manufacture of an article;
a consumption acquiring unit to acquire supply data indicating a type and a supply quantity of energy supplied to the article;
a payment unit to cancel out a whole or part of a levy imposed depending on an emission of the chemical substance by the emission right data;
a degradation calculating unit to calculate a degradation progression degree of the article resulting from use of the article; and
a use fee calculating unit to calculate a use fee of the article, wherein
the use fee calculating unit calculates a first use fee of the article on the basis of a price of the emission right data, the amount of the chemical substance emitted by manufacture of the article, and the degradation progression degree of the article, and
the use fee calculating unit further refers to a load table defining types of energy with emissions of the chemical substance, calculates a second use fee of the article on the basis of the price of the emission right data, and the type and the supply quantity of the energy, and calculates the use fee of the article by adding the second use fee to the first use fee.
